# EUROPEAN PATENT APPLICATION

(11) **EP 4 032 390 A1**
(43) Date of publication of application: **27.07.2022**
(21) Application number: 22151263.5
(22) Date of filing: 13.01.2022
(51) Int. Cl.: A01D 43/10, A01D 82/02, A01D 41/127, A01B 63/00

(54) **IMAGE-BASED ROLL GAP OPTIMIZATION FOR ROLLER CONDITIONER SYSTEMS**

(30) Priority: 19.01.2021 US 202117151792
(71) Applicant: Deere & Company, Moline, IL 61265 (US)
(72) Inventor: KRAUS, TIMOTHY J, 68163 Mannheim (DE)
(74) Representative: Stein, Stefan

(57) **Abstract**

A roll gap optimization process is performed in conjunction with a roller conditioner system (10) containing conditioner rolls (12, 14). In embodiments, the process includes receiving, at a processor architecture (24), pre-conditioned crop images of a forage crop captured at a visually-sampled field location prior to intake of the forage crop into the roller conditioner system (10). The pre-conditioned crop images are analyzed to estimate an average stem dimension of the forage crop, and a roll gap width target is determined as a function of the average stem dimension. The processor architecture further performs one or more of: (i) automatically adjusting a width of the roll gap (16) to substantially match the roll gap width target utilizing a roller adjustment mechanism (20) included in the roller conditioner system (10), and (ii) displaying the roll gap width target on a display device (60) contained in or otherwise coupled to the processor architecture (24) for operator viewing.

## Description

### FIELD OF THE DISCLOSURE

This disclosure relates to roll gap optimization methods for adjusting the roll gap of a roller conditioner system utilizing crop imagery, as well as to roller conditioner systems for conducting image-based roll gap optimization methods.

### BACKGROUND OF THE DISCLOSURE

Roller conditioner systems are commonly integrated into mower-conditioners to mechanically process or "condition" certain crops, such as alfalfa and other forage crops, for field wilting and drying. In contrast to impeller conditioner systems, roller conditioner systems contain two rotatable cylindrical bodies or "conditioner rolls," which are typically mounted in vertically-adjacent relationship and separated by a roll gap having a variable width. The conditioner rolls may assume the form of cylindrical shafts composed of an engineered polymer (e.g., urethane) or an alloy (e.g., steel) and imparted with various intermeshing topological patterns, such as a recessed cleat design, an angled flute design, or a multi-lobe design. Regardless of the particular characteristics of the conditioner rolls contained therein, a roller conditioner system generally functions by ingesting severed crop plants, passing the crop plants between the conditioner rolls for mechanical conditioning via a crushing action, and discharging the newly-conditioned crop plants as a larger agricultural machine or implement containing the roller conditioner system, such as a mower-conditioner, travels over a field.

### SUMMARY OF THE DISCLOSURE

A roll gap optimization process is disclosed for usage in conjunction with a roller conditioner system containing conditioner rolls separated by a roll gap. In embodiments, the roll gap optimization process includes the step or process of receiving, at a processor architecture, pre-conditioned crop images of a forage crop, which are captured at a visually-sampled field location prior to intake of the forage crop into the roller conditioner system. The pre-conditioned crop images are analyzed by the processor architecture to estimate an average stem dimension of the forage crop at the visually-sampled field location, and a roll gap width target is determined as a function of the average stem dimension. The processor architecture then performs one or more of: (i) automatically adjusting a width of the roll gap to substantially match the roll gap width target utilizing a roller adjustment mechanism included in the roller conditioner system, and (ii) displaying the roll gap width target on a display device contained in or otherwise coupled to the processor architecture for operator viewing.

A roller conditioner system, which is utilized in conjunction with an agricultural vehicle, is further disclosed. In embodiments, the roller conditioner system includes a first camera positioned to capture pre-conditioned crop images of a forage crop prior to intake of the forage crop into the roller conditioner system, conditioner rolls separated by a roll gap through which forage crop passes when processed by the roller conditioner system, a roller adjustment mechanism controllable to adjust a width of the roll gap separating the conditioner rolls, and a processor architecture coupled to the first camera and to the roller adjustment mechanism. The processor architecture is configured to visually analyze pre-conditioned crop images, as received from the first camera, to estimate an average stem dimension of the forage crop. The processor architecture further determines a roll gap width target based, at least in part, on the average stem dimension. The processor architecture then performs one or more of: (i) automatically controlling the roller adjustment mechanism to adjust a width of the roll gap to substantially match the roll gap width target, and (ii) presenting the roll gap width target for operating viewing on a display device located within a cabin of the agricultural vehicle.

The details of one or more embodiments are set-forth in the accompanying drawings and the description below. Other features and advantages will become apparent from the description, the drawings, and the claims.

### BRIEF DESCRIPTION OF THE DRAWINGS

At least one example of the present disclosure will hereinafter be described in conjunction with the following figures:
FIG. 1 is a schematic of a roller conditioner system including two conditioner rolls separated by a roll gap having an adjustable width, as illustrated in accordance with an example embodiment;
FIG. 2 illustrates a towed mower-conditioner into which the example roller conditioner system of FIG. 1 may be partially integrated, with certain internal features (e.g., a cutterbar and the conditioner rolls) of the mower-conditioner shown in greater detail in a lower right window;
FIG. 3 is a flowchart of an overarching process for optimizing the roll gap width of a roller conditioner system, such as the roller conditioner system of FIG. 1, by determining and displaying an optimal roll gap width setting (herein, a "roll gap width target") or by automatically performing roll gap width adjustments in accordance with the roll gap width target, as illustrated in accordance with an example embodiment of the present disclosure;
FIG. 4 is a flowchart of a subprocess for determining the roll gap width target as a proportion of the average stem diameter of the crop plants contained in the pre-conditioned crop images; and
FIG. 5 is a schematic of a network architecture or multi-device system including a portable display device, such as a smartphone or tablet, which may be utilized to carry-out the example roll gap optimization process shown in FIG. 3 in alternative embodiments of the present disclosure.

Like reference symbols in the various drawings indicate like elements. For simplicity and clarity of illustration, descriptions and details of well-known features and techniques may be omitted to avoid unnecessarily obscuring the example and non-limiting embodiments of the invention described in the subsequent Detailed Description. It should further be understood that features or elements appearing in the accompanying figures are not necessarily drawn to scale unless otherwise stated.

### DETAILED DESCRIPTION

Embodiments of the present disclosure are shown in the accompanying figures of the drawings described briefly above. Various modifications to the example embodiments may be contemplated by one of skill in the art without departing from the scope of the present invention, as set-forth the appended claims.

### OVERVIEW

As briefly discussed above, roller conditioner systems are commonly integrated into agricultural implements (e.g., mower-conditioners) and utilized to mechanically condition forage crops, such as alfalfa and other grass crops, for field wilting and drying. Generally, a forage crop processed by a roller conditioner system is considered "properly conditioned" when sufficient longitudinal cracks, fissures, or similar ruptures are formed in the stems of the individual crop plants, while the crop leaves remain largely intact and attached to the crop stems. So conditioned, the processed crop plants dry at an increased "dry down" rate to reach moisture levels suitable for storage with greater efficiency, while the forage quality and overall volume of the processed crop plants are better preserved (e.g., by minimizing leaf degradation) during the in-field drying period.

Setting aside other, more specific physical characteristics of a given roller conditioner system, such as the type of conditioner rolls contained in the system, the degree to which a roller conditioner system successfully conditions a particular forage crop is largely determined by a dimensional relationship between the thickness (average or mean diameter) of the stems of the processed crop plants relative to the current width setting of the roll gap separating the conditioner rolls of the roller conditioner system. Under-conditioning of a processed crop can occur if the roll gap is set at an excessive width, resulting in inadequate crop stem rupturing and a suboptimal (sluggish) dry down rate. Conversely, if the roll gap width setting is excessively narrow for a particular volume of processed crop plants, excessive structural damage or "over-conditioning" of the processed crop plants is likely to occur. Crop over-conditioning is generally characterized a high prevalence of detached and destroyed leaves, as well as excessive bruising or other structural damage to the plant stems, potentially resulting in rapid degradation in forage quality and a reduction in volume of the forage crop during in-field drying.

Existing roller conditioner systems, as conventionally integrated into mower-conditioners, permit roll gap width adjustments in a different manners. In one common approach, adjustment of the roll gap is accomplished utilizing a relatively simple manual interface, such as by turning a hanger bolt or a similar threaded member supporting an upper conditioner roll contained in a roller conditioner system, to raise or lower the upper conditioner roll. Raised or lowered in this manner, the upper conditioner roll moves toward or away from the lower conditioner roll to determine the width of the roll gap width. Alternatively, in an even more simplistic approach, an operator may add or remove shims supporting an upper conditioner roll to perform a similar roll gap width adjustment via changes in the vertical positioning of the upper conditioner roll relative to the lower conditioner roll. More recently, improved roller conditioner systems have been developed and introduced, which include one or more actuators (herein, "gap adjustment actuators") controllable to remotely adjust the roll gap width of the roller conditioner system. By common design, the gap adjustment actuator is controlled utilizing some form of operator interface, which is located in the cabin of a tractor (or other work vehicle) utilized to tow a mower-conditioner containing a roller conditioner system. An operator can thus remotely adjust the roll gap width to preference, while the operator remains within the cabin of the tractor coupled to the mower-conditioner.

While the above-described remote roll gap width adjustment capability is useful, common approaches for effectuating width adjustments to the roll gap of a roller conditioner system remain hampered by multiple limitations. For example, while increasing the convenience with which an operator performs roll gap width adjustments, such remote adjustment interfaces do little to inform operators regarding an optimal width setting at which a roll gap is ideally set as the optimal roll gap width varies in conjunction with certain factors, such as the physical characteristics of the crop plants subject to processing. Operators are consequently left to determine appropriate width settings of the roll gap in an unassisted manner prone to human error. In common practice, operators often set the roll gap width of a roller conditioner system utilizing a best guest estimate based upon a highly limited sampling (if any sampling) of local crop measurements or, perhaps, utilizing a cumbersome trial-and-error approach. Further, even in instances in which an operator properly sets the roll gap width of a roller conditioner system at an optimal value for local crop conditions at an initial point in time, the optimal roll gap width setting frequently varies with time as a mower-conditioner (or other agricultural machine) containing the roller conditioner system travels through disparate regions of a crop field or moves between different crop fields. Exacerbating this issue, operators generally remain unaware when adjustment of the roll gap width becomes warranted during roller conditioner system operation without halting operation of the system and any associated agricultural vehicle (e.g., a tractor), exiting the agricultural vehicle, and rechecking local crop conditions with a frequency that is impractical and unproductive.

An ongoing industrial demand thus persists for systems and methods, which aid in determining optimal roll gap width settings for a roller conditioner system and, in at least some instances, which automatically implement roll gap adjustments in accordance with determined optimal width settings. In satisfaction of this ongoing demand, the following discloses roll gap optimization methods for usage in conjunction with roller conditioner systems of varying types, as well as roller conditioner systems configured to automatically maintain roll gap width settings at optimal values during system operation. Embodiments of the roll gap optimization process are carried-out utilizing a processing subsystem or "processor architecture," which contains at least two conditioner rolls separated by a roll gap having an adjustable width. The processor architecture may include one or more processors (e.g., as implemented utilizing one or more integrated circuit (IC) chips) contained in the roller conditioner system itself or distributed across a larger agricultural machine or implement associated with the roller conditioner system. For example, in at least some implementations, the processor architecture may be deployed onboard a non-self-propelled agricultural implement, such as a towed mower-conditioner; deployed onboard an agricultural vehicle utilized to tow (or otherwise move) such an agricultural implement; or deployed onboard a self-propelled agricultural machine, such as a human-operated or autonomous windrower or mower-conditioner, containing the roller conditioner system. In other instances, the processor architecture may be incorporated into a portable display device, such as a smartphone or tablet, in possession of an operator of an agricultural vehicle utilized to propel the roller conditioner system, such as the operator of a tractor utilized to tow a mower-conditioner containing the roller conditioner system. In still other instances, the processor architecture may be included in or communicate with a network-connected server utilized to perform, or help perform certain aspects, of the roll gap optimization process.

Embodiments of the roll gap optimization process involve the step or process of initially establishing an optimal width setting for the roll gap of a roller conditioner system based, exclusively or predominately, on a visual analysis of pre-conditioned crop images; that is, images of crop plants captured prior to intake into and mechanical processing by a roller conditioner system and, specifically, prior to passage of the crop plants between the conditioner rolls of the roller conditioner system. The pre-conditioned crop images are captured at a visually-sampled field location utilizing at least one camera, with the crop images suitably captured as frames of a live video feed or as still images (individual pictures). When the roll gap optimization process is carried-out utilizing a portable display device, such as a smartphone or tablet executing a software application, the camera may be a forward-facing camera integrated into the portable display device or, perhaps, an independent camera operably coupled to the portable display device in some manner. In other implementations, the camera may be located onboard a larger agricultural machine or implement, such as a mower-conditioner or windrower, into which the roller conditioner system is integrated. As a further possibility, the camera utilized to capture the pre-conditioned crop imagery can be integrated into or otherwise mounted to an agricultural work vehicle, such as a tractor, utilized to tow a mower-conditioner or another agricultural implement containing the roller conditioner system.

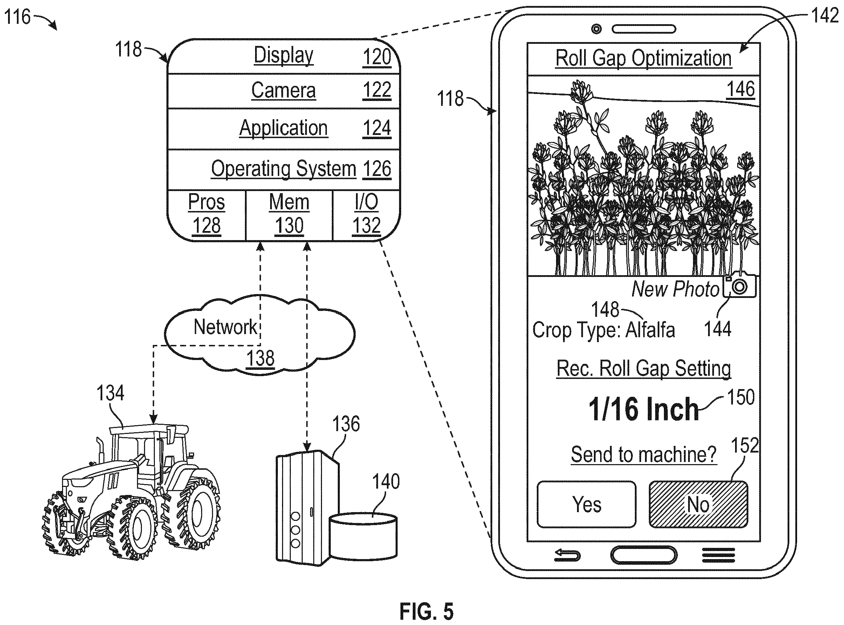

The manner in which the pre-conditioned crop images are analyzed by the processor architecture to arrive at an optimal width setting for the roll gap of a roller conditioner system will differ among embodiments. In certain implementations, the processor architecture determines the optimal width gap setting based, at least in part, on a mathematical relationship between an average dimensions (e.g., stem diameter) of the crop plants detected within a given pre-conditioned crop image (or series of images) and an optimal width setting for the roll gap. For example, in one approach, the processor architecture visually analyzes the pre-conditioned crop images to isolate stems of the crop from other non-stem imagery contained within the pre-conditioned crop images; measures and averages diameters of the isolated stems to calculate the average stem diameter; and then converts the average stem diameter to an optimal width setting or "roll gap width target" utilizing a preestablished proportional relationship between these variables. Such a technique approximates or mimics a manual measurement approach potentially performed by an operator utilizing calipers (or a similar tool) to physically measure a number of sampled crop plants; however, the usage of such a pre-conditioned crop images enables the visual measurement of a significantly greater sample size (e.g., on the order of dozens, if not hundreds) of crop plants by the processor architecture in an abbreviated timeframe (e.g., on the order of a few fractions of a second) to improve both data quality and process efficiency. Further, as the stems of most crop plants possess generally cylindrical cross-sectional shapes (as opposed to oblong or ovular cross-sectional shapes), two dimensional images can be utilized to reliably measure the crop step thicknesses or diameters, providing that such crop stems are adequately visible within the captured images. In embodiments, the processor architecture may also transmit the crop images to a network-connected server, which then analyzes the pre-conditioned crop images (e.g., utilizing a neural network) and returns (via transmission of a reply message over the network) an optimal roll gap width setting, as discussed below in connection with FIG. 5.

Other sensor data can also be considered (consumed as an input) by the processor architecture when initially arriving at the roll gap width target; or, perhaps, to refine the roll gap width target utilizing a feedback loop in various embodiments of the present disclosure. For example, in some implementations, the processor architecture may further receive post-conditioned crop images (that is, imagery of crop plants after passage through the roller conditioner system) and visually analyze the post-conditioned crop images to evaluate the performance of the roller conditioner system and perform fine-tuning of the roll gap width target. In such implementations, the processor architecture may initially evaluate the post-conditioned crop images to determine whether the forage crop is presently conditioned in a non-optimal manner after processing by the roller conditioner system; e.g., due to an inadequate prevalence of longitudinal cracks or other ruptures in stems of the processed crop plants, due to an excessive occurrence of leaf separation or other damage within the post-conditioned crop images, or due to other visual indicia of crop under-conditioning or over-conditioning. If determining the forage crop is conditioned in a non-optimal manner, the processor architecture may then modify the roll gap width target to reduce the non-optimal conditioning of the forage crop. Specifically, the processor architecture may decrease the roll gap width target if determining that the roller conditioner system is presently under-conditioning the processed crop plants; or, conversely, increase the roll gap width target if determining that the roller conditioner system is presently over-conditioning the processed crop plants. Other data inputs can also be considered in fine-tuning the roll gap width target in embodiments including, for example, the physical characteristics of the roller conditioner system (e.g., conditioner roll type) or sensor data, such as meteorological data impacting the dry down rate of the crop plants subject to processing.

After establishing the roll gap width target during a given iteration of the roll gap optimization process, the processor architecture may perform at least one of two actions. When deployed onboard or operably coupled to a roller conditioner system having remote roll gap adjustment capabilities, the processor architecture may command the roller conditioner system (and, specifically, a gap adjustment actuator) to adjust the current roll gap width to substantially match the roll gap width target. Such an auto-adjustment process is usefully carried-out on an iterative basis during operation of certain roller conditioner systems to maintain the roll gap width at an optimal value as crop conditions vary over time in conjunction with intra- or inter-field movement of the roller conditioner system. In other instances, the processor architecture may convey the newly-calculated roll gap width target to the operator in some manner, such as by visual presentation (e.g., as a numerical readout) on a display device located in the cabin of the agricultural vehicle (e.g., a tractor or windrower) utilized to propel the roller conditioner system. In this case, the processor architecture may further enable automatic adjustment of the roll gap width to match the roll gap width target pending approval by an operator; or, instead, the processor architecture may display the roll gap width target to the operator, with the operator then manually or remotely adjusting the roll gap width of the roller conditioner system to match the roll gap width target as desired. Finally, in implementations in which the processor architecture is incorporated into a smartphone, tablet, or another portable display device, the processor architecture may present the newly-calculated roll gap width target on a screen of the portable display device for operator viewing. The operator can then, in his or her discretion, perform those steps necessary to adjust the current roll gap width of the roller conditioner system in accordance with the roll gap width target; or, in certain, cases the personal display device may provide an option to wirelessly transmit the newly-determined roll gap width target to the roller conditioner system for automated adjustment or implementation, providing the roller conditioner system is so capable.

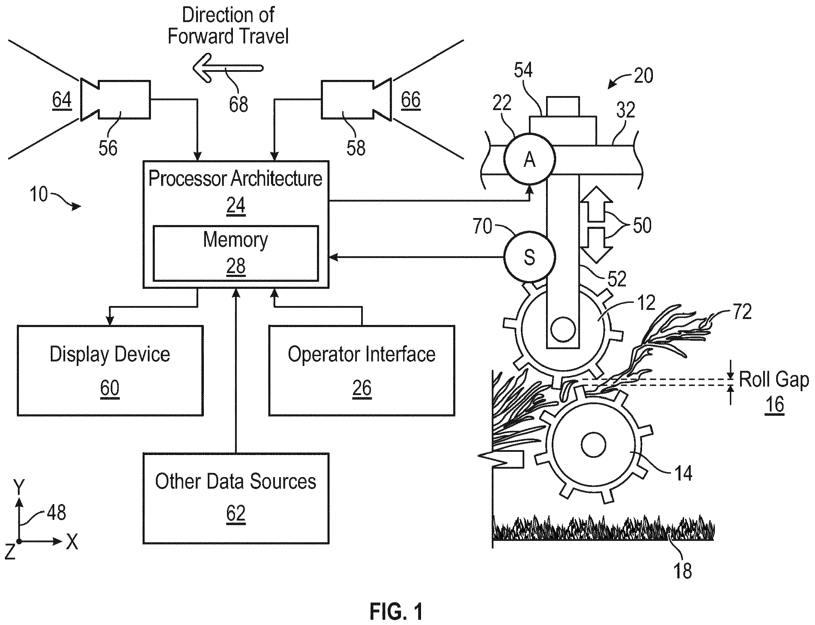

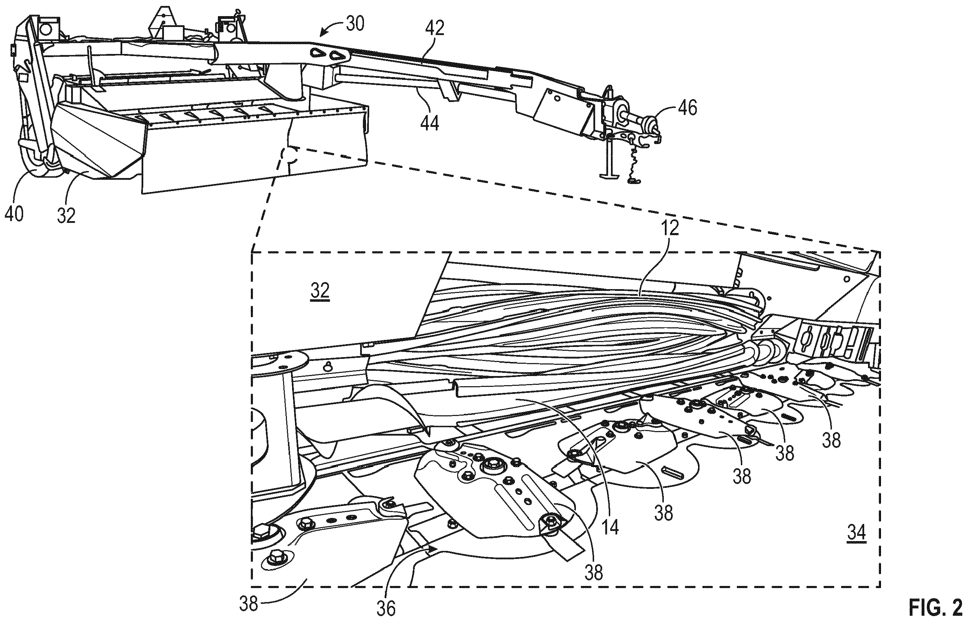

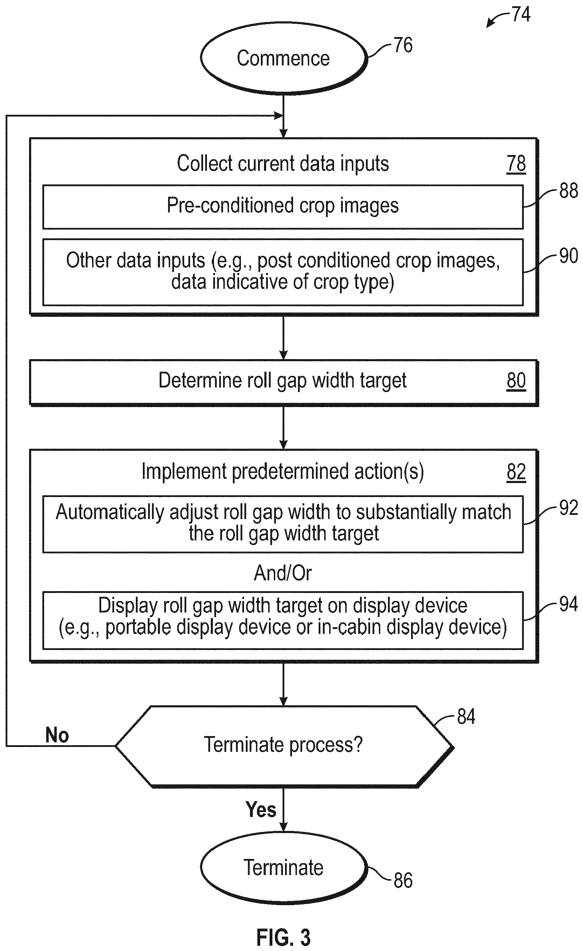

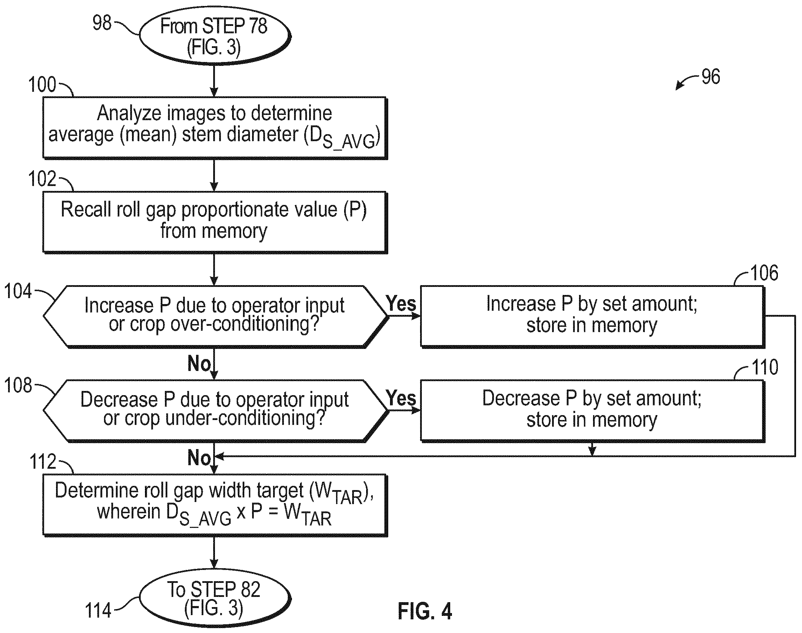

Turning to the accompanying drawing figures, an example embodiment of the roller conditioner system is set-forth below in connection with FIGS. 1 and 2, along with an example of a mower-conditioner into which the roller conditioner system may be partially integrated. While described below in connection with a particular type of agricultural implement (i.e., a towed mower-conditioner), embodiments of the roller conditioner system can be integrated into other types of agricultural implements and machines including self-propelled agricultural vehicles, such as windrowers. Following this, an example roll gap optimization process, as suitably carried-out by a processor architecture associated with a roller conditioner system, is described below in connection with FIG. 3; while an example subprocess for determining the roll gap width target utilizing a proportional relationship between the roll gap width target and an average stem thickness or diameter is further set-forth below in connection with FIG. 4. Finally, example embodiments a portable display device, such as a smartphone or a tablet, suitable for carrying-out embodiments of the roll gap optimization process are further discussed below in connection with FIG. 5. The following description should be understood as merely providing a non-limiting example context in which embodiments of the present disclosure may be better understood.

### EXAMPLE ROLLER CONDITIONER SYSTEMS AND ROLL GAP OPTIMIZATION PROCESSES

FIG. 1 schematically illustrates a roller conditioner system 10 suitable for usage in carrying-out embodiments of the present disclosure. Among other components, the roller conditioner system 10 includes two conditioner rolls 12, 14, which are mounted in a vertically-adjacent relationship and spaced by a roll gap 16 having a variable width. A roller adjustment mechanism 20 is controllable to vary a width of the roll gap 16, which separates the conditioner rolls 12, 14. To provide this function, the roller adjustment mechanism 20 includes at least one actuator 22 (hereafter, a "gap adjustment actuator 22"), which is controllable to adjust the roll gap width pursuant to commands received from a processing sub-system or processor architecture 24 also contained in the roller conditioner system 10. During operation of the roller conditioner system 10, the processor architecture 24 determines when to command the gap adjustment actuator 22 to effectuate roll gap width adjustments based upon operator input received via an operator interface 26; and, in at least some embodiments, the processor architecture 24 automatically implements roll gap adjustments to maintain the roll gap width at an optimal setting during system operation. In the latter regard, the processor architecture 24 may iteratively adjust the width of the roll gap 16 when executing a roll gap auto-adjust process pursuant to computer-readable instructions or programming contained in a memory 28 accessible to the processor architecture 24, as described below in connection with FIGS. 3 and 4.

The processor architecture 24 of the roller conditioner system 10 can assume any form suitable for performing the functions described throughout this document. The term "processing architecture," as appearing herein, is utilized in a non-limiting sense to generally refer to the operably-interconnected processing components of the roller conditioner system 10. The processor architecture 24 can encompass or may be associated with any practical number of processors (e.g., as carried by one or more IC chips), control computers, computer-readable memories, power supplies, storage devices, interface cards, and other standardized components. Further, the processor architecture 24 can be realized utilizing any practical number of processing devices or computers onboard a larger agricultural implement (e.g., a towed mower-conditioner) into which the roller conditioner system 10 is at least partially integrated; a tractor or other agricultural vehicle utilized to propel the roller conditioner system 10 during usage thereof (e.g., by towing a mower-conditioner containing the roller conditioner system 10); or a self-propelled agricultural machine or vehicle (e.g., a windrower) into which the roller conditioner system 10 is integrated. The processor architecture 24 may include or cooperate with any number of firmware and software programs or computer-readable instructions designed to carry-out the various process tasks, calculations, and control/display functions described herein. Such computer-readable instructions may be stored within a non-volatile sector of the memory 28 associated with the processor architecture 24. While generically illustrated in FIG. 1 as a single block, the memory 28 can encompass any number and type of storage media suitable for storing computer-readable code or instructions, as well as other data utilized to support the operation of the roller conditioner system 10.

As stated above, certain components of the roller conditioner system 10 may be integrated into a towed mower-conditioner in embodiments of the present disclosure. An example of such a mower-conditioner is shown in FIG. 2 and identified by reference numeral "30." By way of non-limiting example, a lower right detail window 34 illustrates certain internal components of the mower-conditioner 30 including the twin, closely-spaced conditioner rolls 12, 14; here, depicted as having an intermeshing, angled flute geometry. In further implementations, the conditioner rolls 12, 14 may be imparted with various other designs or topologies, such as a multi-lobe or chevron design. In addition to the conditioner rolls 12, 14 and certain other components (e.g., the roller adjustment mechanism 20), the towed mower-conditioner 30 further includes a housing or mainframe 32, a small portion of which is shown in FIG. 1. The mainframe 32 houses a laterally-elongated cutterbar 36 containing a number of gear-driven cutting disks 34 for severing crop plants ingested into the inlet of the mower-conditioner 30. The cutting disks 34 are spaced along a lateral axis of the mower-conditioner 30 and may be situated slightly forward of the conditioner rolls 12, 14 at an elevation below the roll gap 16, as shown in FIG. 2.

The mainframe 32 of the towed mower-conditioner 30 is supported by a pair of ground-engaging wheels 40, while a tongue 42 extends from the mower-conditioner mainframe 32 in a forward direction to facilitate attachment of the mower-conditioner 30 to a tractor or another agricultural tow vehicle. The mower-conditioner 30 further includes a driveline 44, which is assembled from a number of rotatable shafts mechanically connected utilizing suitable rotary couplings; e.g., U-joints or double cardan joints. The shafts of the driveline 44 co-rotate with the Power Takeoff (PTO) shaft of a tractor when the tongue 42 is joined to the attachment interface (e.g., a 3-point hitch) of a tractor, while a leading coupling 46 of the driveline 44 is rotationally coupled to the tractor PTO shaft. In other embodiments, the mower-conditioner 30 may be driven by an agricultural tow vehicle in another manner; e.g., through electrical or flow line connections spanning the tongue 42 and powering loads (e.g., electric or hydraulics motors) onboard the mower-conditioner 30. Any combination of the aforementioned power transfers schemes can also be utilized in alternative embodiments; or, perhaps, the mower-conditioner 30 may be independently powered.

In the illustrated embodiment of FIGS. 1 and 2, the roller adjustment mechanism 20 acts solely upon the upper conditioner roll 12 to adjust the width of the roll gap 16 through movements of the upper conditioner roll 12 relative to the lower conditioner roll 14; in this case, generally along a vertical axis parallel to the direction of gravity (corresponding to the Y-axis of a coordinate legend 48 appearing in a lower left corner of FIG. 1). Such controlled vertical movement of the upper conditioner roll 12 is denoted in FIG. 1 by a pair of arrows 50. Comparatively, the position of the lower conditioner roll 14 remains stationary relative to the housing or mainframe 32 of the roller conditioner system 10 (partially shown). Accordingly, the lower conditioner roll 14 cannot move translationally along the X-, Y-, or Z-axes of the coordinate legend 48, but is capable of rotation about an axis parallel to the Z-axis of the coordinate legend 48. The upper and lower conditioner rolls 12, 14 are driven to co-rotate relative to the stationary mainframe 32, with the conditioner rolls 12, 14 rotatably mounted to laterally-opposed walls of the mainframe 32 utilizing any suitable arrangement including non-illustrated rolling element bearings to facilitate rotation of the rolls 12, 14. Non-illustrated gearing, a belt system, or a similar mechanical arrangement may also be provided to ensure that the conditioner rolls 12, 14 rotate in a synchronization fashion ensuring proper timing in the rotation of the intermeshing topology of the conditioner rolls 12, 14.

As recently indicated, the roller adjustment mechanism 20 (and, specifically, the gap adjustment actuator 22) acts solely upon the upper conditioner roll 12 to adjust the width of the roll gap 16 through movements of the upper conditioner roll 12 relative to the lower conditioner roll 14. In the illustrated example, such translational movement of the upper conditioner roll 12 occurs in conjunction with corresponding movement of at least one threaded support member or "hanger bolt" 52, which extends downwardly from an upper wall of the mower-conditioner mainframe 32 to support the upper conditioner roll 12. An external surface of the hanger bolt 52 may be threaded and engages an internally-threaded nut 54, which is rotatable relative to the hanger bolt 52 and the mainframe 32 about an axis parallel to the Y-axis of the coordinate legend 48. The gap adjustment actuator 22 is operable to turn the nut 54 about this axis and thereby drive vertical adjustments of the hanger bolt 52 and the upper conditioner roll 12 in embodiments. In other instances, various other arrangements or mechanisms can be provided for adjusting the positioning of the upper conditioner roll 12 (or, perhaps, the lower conditioner roll 14) to adjust the width of the roll gap 16 separating the conditioner rolls 12, 14 in a similar or dissimilar manner. For completeness, it is also noted that embodiments of the present disclosure are also compatible with systems in which the roll gap is adjusted in a manual fashion; e.g., by manually turning the illustrated nut 54 or otherwise adjusting the vertical position of the upper conditioner roll 12. For example, in this latter case, the processor architecture 24 may convey (e.g., via visual presentation) the below-described roll gap width target to an operator of an agricultural vehicle utilized to propel the roller conditioner system 10, such as tractor towing the example mower-conditioner 30 (FIG. 2); with the operator then interacting with a manual interface or the operator interface 26 to then enter the recommended roll gap width setting. Further description in this regard is provided below in connection with FIG. 5.

In addition to the operator interface 26, various other components may be operably coupled to the processor architecture 24 of the roller conditioner system 10 in at least some embodiments of the present disclosure. Such additional components can include at least one camera 56, 58; a display device 60; and any number of additional data sources 62. The connections between the processor architecture 24 and the other components 26, 56, 58, 60, 62, of the roller conditioner system 10 are denoted by signal communication lines in the illustrated example, with the communication lines representing wireless data connections, wired data connections, or any combination thereof. Addressing first the display device 60, when included in the roller conditioner system 10, the display device 60 may assume the form of any image-generating device suitable for usage onboard an agricultural vehicle utilized to propel or move the roller conditioner system 10, such as a tractor or windrower. Commonly, the display device 60 will assume the form of a monitor or display mounted in the cabin of a tractor (or similar work vehicle) utilized to tow a mower-conditioner, such as the mower-conditioner 30 shown in FIG. 2, into which the roller conditioner system 10 is partially integrated. Similarly, in certain cases, the display device 60 may assume the form of a tablet or other portable electronic device carried-into the cabin of a tractor (or another agricultural vehicle) by an operator.

With continued reference to FIGS. 1 and 2, the operator interface 26 of the roller conditioner system 10 can include or assume the form of any device or group of devices utilized by an operator of such a tractor, a windrower, or other agricultural vehicle to input data into or to otherwise control the roller conditioner system 10. The operator interface 26 may include physical inputs (e.g. buttons, switches, dials, or the like) located on or proximate the display device 60, a touchscreen module integrated into the display device 60, or a cursor input device (e.g., a joystick, trackball, or mouse) for positioning a cursor utilized to interface with graphic user interface (GUI) elements generated on the display device 60. Comparatively, the additional data sources 62 can include various sensors (e.g., an atmospheric moisture sensor), a Global Positioning System (GPS) module, or other components for gathering data (e.g., a telematics module gateway or other network interface) utilized in performing the below-described roll gap optimization processes, as considered in addition to the live camera feeds provided from the camera or cameras included in the roller conditioner system 10. Finally, as further operably coupled to the processor architecture 24, a sensor 70 (e.g., a variable differential transformer or a potentiometer) may also be included in the roller conditioner system 10 in embodiments to monitor the width of the roll gap 16 by, for example, monitoring the position of the hanger bolt 52 or other structural member having a position from which the roll gap width can be inferred. In other embodiments, such a sensor 70 may be integrated into the actuator 22 or omitted from the roller conditioner system 10.

Embodiments of the roller conditioner system 10 are equipped with at least one camera 56, 58; although the possibility that another camera-equipped electronic device, such as a smartphone or tablet, may be utilized to captured and then wirelessly transmit images to the roller conditioner system 10 in alternative embodiments is not precluded. In the illustrated example, specifically, the roller conditioner system 10 includes at least two cameras: (i) a first camera 56 having a field of view (FOV) 64 positioned to capture pre-conditioned crop imagery, and (ii) a second camera 58 having an FOV 66 positioned to capture post-conditioned crop imagery. The first camera 56 may be mounted to an implement containing the roller conditioner system 10 (e.g., the mower-conditioner 30 shown in FIG. 2) or to an agricultural vehicle (e.g., a tractor) utilized to propel the roller conditioner system 10 (e.g., via towing of the host mower-conditioner 30) in a forward-facing orientation, as may be inferred by reference to an arrow 68 denoting the forward direction of travel in FIG. 1. Conversely, the second camera 58 is conveniently mounted to an implement containing the roller conditioner system 10 (e.g., the mower-conditioner 30) or to an agricultural vehicle (tractor) utilized to propel the roller conditioner system 10 in a rear-facing orientation. For this reason, the cameras 56, 58 are specifically referred to hereafter as "forward-facing" and "rear-facing" cameras, respectively. It is emphasized, however, the forward-facing camera 56 can be positioned in an any orientation or location suitable for captured pre-conditioned crop imagery in embodiments, potentially including locations internal to a larger agricultural implement or machine (e.g., the mower-conditioner 30, FIG. 2) carrying the roller conditioner system 10. So too can the rear-facing camera 58 be positioned in an any orientation or location suitable for captured post-conditioned crop imagery; that is, imagery of the severed crop plants or material after mechanical conditioning by the mower-conditioner 30 and discharge from the conditioner rolls 12, 14. Finally, it will be appreciated that, as may various other components of the example system 10, the rear-facing camera 58 may be omitted from the roller conditioner system 10 in alternative embodiments.

As the roller conditioner system 10 is propelled over a crop field 18 in some manner (here, by towing the mower-conditioner 30 over the field 18), crop plants are severed by the cutting disks 38 and fed into the roll gap 16 separating the conditioner rolls 12, 14. The severed crop plants are mechanically processed by crushing between the conditioner roll 12, 14 and then discharged from the roller conditioner system 10, as indicated in FIG. 1 at 72. The processed crop plants may ultimately be deposited onto the field 18 as windrows or swaths, which are left to wilt and dry before subsequent collection and storage. As described throughout this document, optimal conditioning of the processed crop plants depends, in large part, on key dimensional relationships between the physical characteristics of the crop plants (e.g., the average stem thickness or diameter) and the width setting of the roll gap 16. It can, however, be difficult or cumbersome for an operator to reliably and repeatedly adjust the width of the roll gap 16 to an ideal setting in real-world operational scenarios, particularly as the average dimensions of the processed crop plants may vary as the roller conditioner system 10 and, more generally, the mower-conditioner 30 travels through the crop field 18 or between different crop fields. For at least this reason, the processor architecture 24 advantageous executes a computer-implemented roll gap optimization process during usage of the roller conditioner system 10. Through performance of the roll gap optimization process, the processor architecture 24 may directly maintain the width of the roll gap 16 at an optimal setting during usage of the roller conditioner system 10. Similarly, in embodiments, the processor architecture 24 may carry-out a roll gap optimization process to aid in maintaining the roll gap width at an optimal setting by conveying an optimized recommendation (roll gap width target) to an operator, such as the operator of a tractor pulling the mower-conditioner 30 and the roller conditioner system 10 across the illustrated field 18. Examples of such a roll gap optimization process will now be described in connection with FIG. 3.

FIG. 3 is a flowchart of an example method or process 74 for optimizing the roll gap width of a roller conditioner system. To provide an illustrative context, the process 74 (hereafter, the "roll gap optimization process 74") is described below as carried-out by the processor architecture 24 of the above-described roller conditioner system 10. The present example notwithstanding, the roll gap optimization process 74 can be carried-out by other processor architectures and utilizing other roller conditioner systems in alternative embodiments. For example, in certain embodiments, the roll gap optimization process 74 may be carried-out utilizing a portable display device, as further discussed below in connection with FIG. 5; or the process 74 can be performed by a roller conditioner system integrated into a different type of agricultural implement or machine, such as windrower. The roll gap optimization process 74 includes a number of process STEPS 76, 78, 80, 82, 84, 86, each of which is described, in turn, below. Further, one or more additional SUBSTEPS 88, 90 may be performed during STEP 78, as discussed below; and/or one or more additional SUBSTEPS 92, 94 may be performed STEP 82 of the roll gap optimization process 74. More generally, each step generically illustrated in FIG. 3 may entail a single process or multiple sub-processes, depending upon the manner in which the roll gap optimization process 74 is implemented. The steps illustrated in FIG. 3 and described below are provided by way of non-limiting example only. In alternative embodiments of the roll gap optimization process 74, additional process steps may be performed, certain steps may be omitted, and/or the illustrated process steps may be performed in alternative sequences.

The example roll gap optimization process 74 (FIG. 3) commences at STEP 76 in response to the occurrence of a predetermined trigger event, as detected by the processor architecture 24 of the roller conditioner system 10. The predetermined trigger event can be any event, condition, or occurrence indicating that the roll gap optimization process 74 is desirably performed at the present juncture in time; or that it may be desirable to perform such a function during ensuing usage of the roller conditioner system 10 and, int he illustrated example, the mower-conditioner 30 generally. To this end, the roll gap optimization process 74 may initiate at STEP 76 in response to startup or activation of the mower-conditioner 30. Alternatively, the trigger event may be entry of operator input requesting activation or execution of the roll gap optimization process 74; and, perhaps, the entry of operator (as received via the operator interface 26) specifically requesting activation of a roll gap auto-adjustment function, such as that described below in connection with SUBSTEP 92 of the roll gap optimization process 74.

Following commencement of the roll gap optimization process 74, the processor architecture 24 progresses to STEP 78 and gathers pertinent data inputs utilized in performing the remainder of the process 74; the terms "data" and "data inputs," as appearing herein, encompassing imagery captured by one or more cameras in addition to other types of data input, examples of which are described below. As previously stated, and as further indicated in FIG. 3 at SUBSTEP 88, such data inputs will typically include one or pre-conditioned crop images captured by a camera, such as the forward-facing camera 56 shown in FIG. 1. The pre-conditioned crop images can be captured as still images (pictures) or, instead, as frames extracted from a live video feed captured by the forward-facing camera 56. For example, in certain embodiments, the forward-facing camera 56 may be mounted to the mower-conditioner 30 (particularly if towed in a side-pull configuration); or, instead, mounted to a tractor utilized to tow the mower-conditioner 30. Further, in certain instances, such a tractor (or similar agricultural tow vehicle) may already be equipped with one or more forward-facing cameras utilized for navigational assistance (e.g., row following) functions or for autonomous operation, with such cameras potentially leveraged to serve as the forward-facing camera 56 of the roller conditioner system 10. In other embodiments in which the roll gap optimization process 74 is instead performed utilizing a portable display device, the pre-conditioned crop images can be captured by a camera integrated into the display device itself, as discussed below in connection with FIG. 5.

As indicated in FIG. 3 at SUBSTEP 90, additional data inputs may be gathered during STEP 78 in at least some implementations of the roll gap optimization process 74. When gathered, such additional data inputs can include any combination of data recalled from the computer-readable memory 28, entered via the operator interface 28, or received from sensors onboard the mower-conditioner 30 or an agricultural tow vehicle (e.g., a tractor) to which the mower-conditioner 30 is coupled. As one example, the additional data may include post-conditioned crop images captured by a second camera, such as the rear-facing camera 58 shown in FIG. 1, when included in the roller conditioner system 10. Examples of manners in which such post-conditioned crop images may be processed to aid in calculating the roll gap width target and/or in fine-tuning the role gap width target (e.g., utilizing a feedback loop approach) are discussed below in connection with FIG. 4. As a further possibility, the additional data inputs can include any sensor data or operator input indicative of the current type of forage crop currently processed (or soon to be processed) utilizing the roller conditioner system 10. Various other data items can also be collected during STEP 78 of the roll gap optimization process 75 including, but not limited to meteorological data impacting the dry down period of the processed crop plants. Data may also be recalled from a computer-readable memory (e.g., the memory 28 shown in FIG. 1) describing physical characteristics of the roller conditioner system 10 (e.g., conditioner roll type) if impacting the manner in which the roll gap width target is calculated. So too may the relevant mathematical formulae or variables be recalled from the memory 28 and utilized in converting the relevant data inputs (e.g., the current average stem diameter) to the below-described roll gap width target.

Advancing to STEP 80 of the roll gap optimization process 74, the processor architecture 24 next calculates a current value of the roll gap width target utilizing the data inputs collected during STEP 78. The particular manner in which the pre-conditioned crop images are analyzed by the processor architecture 24 to arrive at an optimal width gap setting (the roll gap width target) will differ among embodiments. Generally, however, the processor architecture 24 determines the optimal width gap setting based, at least in principal part, on an established mathematical relationship between the roll gap width target and an average stem thickness or diameter of the crop plants within a given pre-conditioned crop image or series of images, as collected during SUBSTEP 88 of the roll gap optimization process 74. In one possible approach, the processor architecture 24 visually analyzes the pre-conditioned crop images to isolate stems of the forage crop from other non-stem imagery contained within the pre-conditioned crop images. Such visual isolation techniques are known in variuos contexts for recognizing patterns, landmarks, and the outlines of objects within images; and can be applied utilizing a neural network in embodiments. The processor architecture 24 may then visually measure and average diameters of the isolated stems to calculate the average stem diameter. Specifically, and as discussed more fully below in connection with FIG. 4, the controller architecture 24 may determine the roll gap width target based, at least in principal part, on a proportional relationship between the roll gap width target and the average stem thickness or mean diameter of the crop plants established via visual analysis of the pre-conditioned crop images.

As noted above, additional sensor data can also be considered (consumed as an input) by the processor architecture 24 when initially arriving at the roll gap width target. For example, as indicated at SUBSTEP 90, the processor architecture 24 may also receive post-conditioned crop images and analyze such images to refine the roll gap width target, as described below in connection with FIG. 4. Further or alternative data inputs can also be considered in fine-tuning the roll gap width target including, for example, the physical characteristics of the roller conditioner system (e.g., conditioner rolls type) or sensor data, such as meteorological data impacting the dry down rate of the crop subject to processing. In the case of meteorological conditioners, for example, the roll gap width target may be widened slightly should current humidity conditions favor rapid dry down of the processed crop to allow the roller conditioner system 10 to, for example, err on the side of imparting somewhat reduced structural damage to the crop stems to minimize the likelihood of crop over-conditioning by, for example, improving leaf preservation.

Next, at STEP 82 of the roll gap optimization process 74, the processor architecture 24 performs at least one of two actions. First, as indicated in FIG. 3 by SUBSTEP 92, the processor architecture 24 may automatically adjust the roll gap width to substantially match the roll gap width target determined during STEP 80, when the roller conditioner system 10 possesses this capability. Such an "auto-adjustment" process or function may be usefully carried-out on an iterative basis during usage of the roller conditioner system 10 to maintain the roll gap width at an optimal value as crop conditions change over time. In this case, the controller architecture 24 may transmit appropriate commands to the gap adjustment actuator 22 (FIG. 1) to adjust the vertical position of the upper conditioner roll 12, as appropriate, to bring the width of the roll gap 16 into alignment or harmony with the roll gap width target. In embodiments, the controller architecture 24 may command the gap adjustment actuator 22 to adjust the roll gap width to be substantially equivalent to the roll gap width target within a permissible margin of error avoid repeated, excessively minor adjustments or flutter of the roll gap 16. Further, the controller architecture 24 may determine the appropriate control commands for transmission to the gap adjustment actuator 22 based upon the actuator characteristics and the current width of the roll gap 16 prior to the adjustment, as detected by the sensor 70. In certain instances, an operator may also be permitted to selectively activate or deactivate such a roll gap auto-adjustment process by, for example, interacting with a GUI settings page or screen generated on the display device 60.

In other instances, and as indicated in FIG. 3 at SUBSTEP 94, the processor architecture 24 may instead convey the newly-calculated roll gap width target to the operator in some manner, typically by visual presentation (e.g., as a numerical readout) via the display device 60, although the possibility of an audible annunciation of the roll gap width target is not precluded. Additionally, in certain cases, the processor architecture 24 may enhance operator convenience by further enable automatic adjustment of the roll gap width to match the roll gap width target pending approval by an operator; e.g., via input received via the operator interface 26. Alternatively, the processor architecture 24 may convey the roll gap width target to the operator in an audible or visual manner (e.g., by simulated voice annunciation or by generation on the display device 60), with the operator then utilizing this information in the operator's discretion. For example, in this latter regard, the operator can then manually or remotely adjust the roll gap width of the roller conditioner system 10 to match the roll gap width target. Following this, and progressing to STEP 84 of the roll gap optimization process 74, the processor architecture 24 determines whether the roll gap optimization process 74 should terminate. If determining that the roll gap optimization process 74 should terminate at STEP 84, the processor architecture 24 progresses to STEP 84 and terminates the roll gap optimization process 74 accordingly. If instead determining that an additional iteration of the roll gap optimization process 74 should be performed, the processor architecture 24 returns to STEP 78 and the above-described process steps repeat or loop.

FIG. 4 is a flowchart of a subprocess 96 for calculating the roll gap width target (W_{TAR}), which can be carried-out as part of the roll gap optimization process 74 in embodiments of the present disclosure. As indicated in FIG. 4 via a graphic 98, the subprocess 96 may progress to STEP 100 from STEP 78 of the roll gap optimization process 74 (FIG. 3). During STEP 100, the processor architecture 24 may determine the roll gap width target for the roller conditioner system 10 based, in whole or in substantial part, on a proportional relationship the average stem diameter of the crops within the pre-conditioned crop image. Accordingly, as indicated in FIG. 4 at STEP 100, the processor architecture 24 may analyze the pre-conditioned crop image or images collected during STEP 78 of the roll gap optimization process 74 (FIG. 3) to determine an average stem diameter (D_{S_AVG}) for the crop plants subject to visual sampling. Additionally, as indicated in FIG. 4 at STEP 102, the processor architecture 24 may recall a roll gap proportionate value (P) from the memory 28 (FIG. 1); and, at STEP 112, the processor architecture 24 calculates a baseline value for the roll gap width target as a percentage or proportion (herein, P) of the average stem diameter of the visually-sampled crop plants. Next, and as indicated in FIG. 4 at STEP 114, the processor architecture 24 advances to STEP 82 of the roll gap optimization process 74 (FIG. 3), as previously described. Prior to this, however, the processor architecture 24 can potentially adjust the value of the roll gap proportionate value (P) upwardly or downwardly to fine-tune the roll gap width target utilizing a feedback loop approach, as discussed below in connection with STEPS 104, 106, 108, 110 of the subprocess 96.

Continuing the description above pertaining to STEPS 102, 112 of the subprocess 96, the value of P may range inclusively from 25% to 75% in embodiments and, perhaps, from 40% to 60% inclusive in embodiments; e.g., as example, in a scenario in which the value of P is 50%, the controller architecture 24 may determine the roll gap width target to be equivalent to one half of the average (mean) crop stem diameter of the visually-sampled crop plants subject to processing utilizing the roller conditioner system 10. In other implementations, P may be greater than or less than the aforementioned ranges. Further, in at least some instances, the initial value P may vary based certain data inputs or parameters, such as the conditioner role type contained in the roller conditioner system 10 or a categorization of the forage crop subject to processing. In the latter case, the processor architecture 24 may categorize or assign the forage crop to one of a plurality of forage crop categories, and then select P based on the forage crop category to which the forage crop is assigned. In such embodiments, the forage crop category or type can be determined based upon operator input, automatic recognition of the crop type via visual analysis of the pre-conditioned crop images, and/or other sensor data. Moreover, the statements above may pertain to a default or starting value of P, which may be adjusted on an as-needed basis to provide fine-tuning of the roll gap width target based upon, for example, operator input modifying the conditioning intensity of the roller conditioner system 10 and/or based upon a feedback loop algorithm, as further discussed below.

In at least some implementations, the value of the roll gap proportionate value (P) may be adjusted on a relatively fine, iterative basis based upon the performance of the roller conditioner system 10 to provide refinement of the roll gap width target utilizing a feedback loop. One manner in which such a feedback loop technique may be implemented is generally outlined by STEPS 104, 106, 108, 110 of the subprocess 96. Initially addressing STEP 104 of the example subprocess 96, the processor architecture 24 may assess whether the roller conditioner system 10 is presently under-conditioning processed crop plants based upon, for example, operator input and/or a visual analysis of post-conditioned crop images when availed to the processor architecture 24; e.g., as images captured by the rear-facing camera 58. In this latter regard, the processor architecture 24 may determine that the roller conditioner system 10 is over-conditioning processed crop plants if visually detecting one or more indicia of over-conditioning, such as an excessive presence of detached or destroyed leaves in the post-conditioned crop images. If detecting the occurrence of under-conditioning, the processor architecture 24 advances to STEP 106 of the subprocess 96 and increases P by a set amount. This increase in the value of P results in a corresponding increases the roll gap width target (W_{TAR}), as calculated during STEP 112. In certain cases, such an increase in the value of P, as selectively applied at STEP 106 of the subprocess 96, may be applied as a non-variable, relatively minor increase; or, instead, the value of P may be increased by a variable amount depending upon the severity of the detected over-conditioning. Afterwards, the processor architecture 24 stores the newly-updated value of P in the memory 28 for subsequent reference and advances to STEP 112.

If instead determining the roller conditioner system 10 is not presently over-conditioning crop plants during STEP 104 of the subprocess 96, the processor architecture 24 progresses to STEP 108 and determines whether a decrease in the value of P is instead warranted due to, for example, the reception of operator input or the detection of crop under-conditioning. In a manner similar to that just described, the processor architecture 24 may determine that the roller conditioner system 10 is presently under-conditioning processed crop plants if, during STEP 108, the processor architecture 24 visually detecting one or more indicia of under-conditioning via analysis of the post-conditioned crop images. Such visual indicia may include inadequate rupturing, such as relatively few longitudinal cracks, in the stems of the crop plants visible within the post-conditioned crop images. If determining that the roller conditioner system 10 is presently under-conditioning the crop plants during STEP 108, the processor architecture 24 advances to STEP 110 and decreases P by a set amount. In certain cases, the increase in P applied at STEP 110 may be a relatively small, fixed amount; or, instead, may vary the degree to which P is increased based upon the assessed severity of the detected over-conditioning. The processor architecture 24 then stores the newly-updated value of P in the memory 28 and advances to STEP 112. If instead determining that crop under-conditioning is not presently occurring during STEP 112 of the subprocess 96, the controller architecture 24 advances directly to STEP 112 to calculate the roll gap width target (W_{TAR}) in the manner previously described.

### EXAMPLE OF A PORTABLE DISPLAY DEVICE SUITABLE FOR CARRYING-OUT EMBODIMENTS OF THE ROLL GAP OPTIMIZATION PROCESS

Addressing lastly FIG. 5, there is shown a schematic of a multi-device system 116 including a portable display device 118 suitable for performing embodiments of the present disclosure. Two instances of the portable display device 118 are shown: a schematic representation of the personal display device 118 (top left), and a front view of the personal display device 118 (right). In this particular example, the portable display device 118 assumes the form of a smartphone, but can assume the form of other portable (e.g., camera-equipped) electronic devices (e.g., a tablet) in further embodiments. The portable display device 118 includes a display module or screen 120, an integrated camera 122, a processor architecture 128 (containing one or more processors and other components supporting the processing capabilities of display screen 120, as generally discussed above), a computer-readable memory 130, and various input/output (I/O) features 132. An operating system 126 is loaded onto the memory 130 and supports the execution of a software application 124, which may direct the various software and hardware features of the display module 120 to perform those actions or tasks involved in performing the roll gap optimization process.

In certain implementations, the portable display device 118 may communicate with an onboard computer system of an agricultural vehicle 134 and/or one or more servers 136 over a network 138. The agricultural vehicle 134 is depicted as a tractor in the illustrated example and is consequently referred to as "tractor 134" hereafter. The tractor 134 can be operably connected to an agricultural implement, such as the mower-conditioner 30, into which a roller conditioner system (e.g., the above-described roller conditioner system 10) is at least partially integrated, as previously discussed. In other instances, the portable display device 118 may communicate over the communication network 138 with a different agricultural vehicle associated with the roller conditioner system 10, such as a windrower into which the roller conditioner system 10 is integrated. As a further possibility, the portable display device 118 may communicate directly with an implement (e.g., the mower-conditioner 30) containing at least a portion of the roller conditioner system 10 over a short range, peer-to-peer wireless connection. In still other instances, the portable display device 118 may not communicate with any such agricultural implement or machine when performing the roll gap optimization process. When applicable, the network 138 can include one or more open content delivery networks, Virtual Private Networks (VPNs), the Internet, cellular networks, and various other communications networks implemented in accordance with transmission control protocol/Internet protocol (TCP/IP) architectures or other conventional protocols.

As further depicted in FIG. 5, the server or servers 136 can be implemented utilizing a cloud computing (distributed server) architecture, a localized server or server farm operating on the Internet, or in some other manner. In embodiments, the network-connected server side 136 may be availed as part of a service for providing various functions or tools assisting in the operation of an agricultural vehicle (e.g., the depicted tractor 134), an agricultural implement (e.g., the mower-conditioner 30 shown in FIG. 2), or other such agricultural machines. When applicable, the server side 136 may also maintain or otherwise have access to a database 140 storing data utilized in performing embodiments of the roll gap optimization process. For example, in embodiments in which the server 136 assists in calculating the roll gap width target, the database 140 may store a multi-dimensional look-up table or other data structure correlating different types of crop plants (and, perhaps, different types of conditioner rolls, different mower-conditioner models, or the like) with different values for roll gap proportionate value (P) discussed above in connection with FIG. 4.

As indicated on the right of FIG. 5, the portable display device 118 may execute a software program, which presents an operator with a roll gap width target based upon one or more preconditioned crops images and possibly other data entered into the display device 118 by the operator. An example GUI screen 142 is shown on the right side of FIG. 5, which may be generated by the processor architecture 128 when executing a software program. The operator may interact with the GUI screen 142 to capture a picture of the crop field at a visually-sampled location utilizing the camera 122 of the portable display device 118 (e.g., the rear-facing camera of a smartphone), as indicated in FIG. 5 by a camera icon 144. An example of such picture 146 is further shown on the display screen 120 of the portable display device 118, as captured by an operator utilizing the portable display device 118. In certain cases, the operator may also be permitted to enter other data utilized in calculating the roll gap width target, such as information pertaining to crop type or the physical characteristics of the roller conditioner system 10. For example, as indicated in FIG. 5 by a read-out 148, an operator may be select the crop type subject or soon subject to processing utilizing the roller conditioner system 10 via, for example, a drop down menu interface accessed by touching or otherwise selecting the read-out 148.

After receipt of the pertinent data inputs, the processor architecture 128 may then perform the above-described processes for calculating the roll gap width target utilizing these data inputs, and present the calculated roll gap width target on the display screen 120 for operator viewing. An example of such a numerical read-out visually conveying a calculated roll gap width target (here, expressed in inches) is shown in FIG. 5 at read-out 150. In other instances, the processor architecture 128 may transmit the relevant data (e.g., the captured pre-conditioned crop images and the crop type) over the network 138 and to the server side 136, with the server side 136 then calculating the roll gap width target. The server side 136 may then return a reply message, as transmitted to the portable display device 118 over the network 138, containing the newly-calculated roll gap width target for presentation on the display screen 120. Finally, in embodiments in which the tractor 134 is network-connected and the roller conditioner system 10 is capable of remote roll gap width adjustment, the processor architecture 128 can potentially provide an option for wirelessly transmitting the roll gap width target to the onboard computer of the tractor 134 for automatic entry; e.g., via appropriate commands sent to the gap adjustment actuator 22, as previously described. One manner in which such an option may be visually presented to operator is shown in a bottom region 152 of the example GUI screen 142. In still other instances, the portable display device 118 may communicate directly with the tractor 134 over a short range wireless (e.g., BLUETOOTH) connection or, perhaps, the roller-conditioner system 10 (e.g., as contained in the mower-conditioner 30) to implement such automated adjustments to the roll gap 16 (FIG. 1) in accordance with operator input received during interaction with the portable display device 118.

### ENUMERATED EXAMPLES OF METHODS FOR ROLL GAP OPTIMIZATION

The following examples of methods for providing roll gap optimization are further provided and numbered for ease of reference.
1. A roll gap optimization process is performed in conjunction with a roller conditioner system containing conditioner rolls separated by a roll gap. In embodiments, the process includes the step or process of receiving, at a processor architecture, pre-conditioned crop images of a forage crop captured at a visually-sampled field location prior to intake of the forage crop into the roller conditioner system. The pre-conditioned crop images are analyzed by the processor architecture to estimate an average stem dimension of the forage crop at the visually-sampled field location, and a roll gap width target is determined as a function of the average stem dimension. The processor architecture then performs one or more of: (i) automatically adjusting a width of the roll gap to substantially match the roll gap width target utilizing a roller adjustment mechanism included in the roller conditioner system, and (ii) displaying the roll gap width target on a display device contained in or otherwise coupled to the processor architecture for operator viewing.
2. The roll gap optimization process of example 1, wherein the roller conditioner system is integrated into a mower-conditioner propelled utilizing an agricultural vehicle. The step of receiving entails receiving, at the processor architecture, pre-conditioned crop images captured by a camera mounted to the mower-conditioner or to the agricultural vehicle.
3. The roll gap optimization process of example 2, further including repeatedly performing the steps of receiving, analyzing, determining, and implementing during forward travel of the agricultural vehicle and usage of the mower-conditioner.
4. The roll gap optimization process of example 2, wherein the agricultural vehicle includes a cabin in which the display device is located. Further, the step of displaying entails generating a numerical readout of the roll gap width target on the display device for viewing by an operator within the cabin of the agricultural vehicle.
5. The roll gap optimization process of example 1, wherein the roller adjustment mechanism includes a gap adjustment actuator. The step of implementing entails controlling the gap adjustment actuator to adjust the width of the roll gap to substantially match the roll gap width target.
6. The roll gap optimization process of example 1, wherein the average stem dimension includes an average stem diameter. Further, the step of analyzing includes the sub-steps or sub-processes of: (i) isolating stems of the forage crop from other non-stem imagery contained within the pre-conditioned crop images; and (ii) visually measuring and averaging diameters of the isolated stems to calculate the average stem diameter.
7. The roll gap optimization process of example 1, wherein the average stem dimension is an average stem diameter. Further, the step of determining entails calculating a baseline value for the roll gap width target as P percentage of the average stem diameter, with P being equal to or greater than 25% and equal to or less than 75%.
8. The roll gap optimization process of example 7, further including the steps or processes of: (i) assigning, at the processor architecture, the forage crop to a forage crop category; and (ii) determining a value of P based, at least in part, on the forage crop category to which the forage crop is assigned.
9. The roll gap optimization process of example 1, further including the steps or processes of: (i) further receiving, at a processor architecture, post-conditioned crop images captured of the forage crop after processing by the roller conditioner system; (ii) evaluating, at the processor architecture (24), the post-conditioned crop images; and (iii) selectively modifying the roll gap width target based upon the post-conditioner crop images.
10. The roll gap optimization process of example 9, wherein evaluating includes detecting, via image analysis performed by the processor architecture, a prevalence of longitudinal cracks in stems within the post-conditioned crop images.
11. The roll gap optimization process of example 9, wherein evaluating includes detecting, via image analysis performed by the processor architecture, a prevalence of leaf separation within the post-conditioned crop images.
12. The roll gap optimization process of example 9, wherein the step of modifying includes the steps or sub-processes of: (i) decreasing the roll gap width target if determining that the forage crop is under-conditioned when processed by the roller conditioner system; and (ii) increasing the roll gap width target if determining that the forage crop is over-conditioned when processed by the roller conditioner system.
13. The roll gap optimization process of example 1, wherein the display device assumes the form of a portable display device containing the processor architecture and having an integrated camera. The roll gap optimization process further includes the steps or processes of: (i) prompting an agricultural vehicle operator, via the portable display device, to capture the pre-conditioned crop images utilizing the integrated camera; and (ii) generating the roll gap width target on a screen of the portable display device after determining the roll gap width target as a function of the average stem dimension.
14. The roll gap optimization process of example 13, wherein the portable display device comprises a smartphone or a tablet in possession of the agricultural vehicle operator.
15. A roller conditioner system is utilized in conjunction with an agricultural vehicle having a cabin. The roller conditioner system includes a first camera positioned to capture pre-conditioned crop images of a forage crop prior to intake of the forage crop into the roller conditioner system, conditioner rolls separated by a roll gap through which forage crop passes when processed by the roller conditioner system, a roller adjustment mechanism controllable to adjust a width of the roll gap separating the conditioner rolls, and a processor architecture coupled to the first camera and to the roller adjustment mechanism. The processor architecture is configured to visually analyze pre-conditioned crop images, as received from the first camera, to estimate an average stem dimension of the forage crop. The processor architecture further determines a roll gap width target based, at least in part, on the average stem dimension. The processor architecture then performs one or more of: (i) automatically controlling the roller adjustment mechanism to adjust a width of the roll gap to substantially match the roll gap width target, and (ii) presenting the roll gap width target for operating viewing on a display device located within a cabin of the agricultural vehicle.

### CONCLUSION

There has thus been provided systems and methods for optimizing the roll gap of a roller conditioner system; and, in certain cases, for automatically implementing roll gap adjustments in accordance with a calculated optimal roll gap width or "roll gap width target." In the above-described examples, the roller conditioner system is principally described in the context of a mower-conditioner, which is connected to a tractor in a tow arrangement. This notwithstanding, it is emphasized that embodiments of the roller conditioner system are also amenable to integration to other self-propelled work machines, such as windrowers, and other types of non-self-propelled (e.g., towed) agricultural implements without limitation. Through implementation of the above-described methods and systems, the roll gap width of a roller conditioner system can be better maintained at an optimal setting during system operation to improve reduce the occurrence of over-conditioning or under-conditioning of a processed crop plants. This, in turn, may better preserve the quality and volume of the crop plants through the in-field drying period prior to collection and storage of the processed crop plants. Concurrently, embodiments of the disclosed systems and methods may improve operator convenience by reducing operator workload in assessing and implementing roll gap width settings for a given roller conditioner system, whether contained in mower-conditioner, another towed agricultural implement, or a self-propelled work machine.

As will be appreciated by one skilled in the art, aspects of the disclosed subject matter can be described in terms of not only systems (e.g., roller conditioner systems) and methods, but also in terms of computer program products. With respect to computer program products, in particular, embodiments of the disclosure may consist of or include tangible, non-transitory storage media storing computer-readable instructions or code for performing one or more of the functions described throughout this document. As will be readily apparent, such computer-readable storage media can be realized utilizing any currently-known or later-developed memory type, including various types of random access memory (RAM) and read-only memory (ROM). Further, embodiments of the present disclosure are open or "agnostic" to the particular memory technology employed, noting that magnetic storage solutions (hard disk drive), solid state storage solutions (flash memory), optimal storage solutions, and other storage solutions can all potentially contain computer-readable instructions for carrying-out the functions described herein. Similarly, the systems or devices described herein may also contain memory storing computer-readable instructions (e.g., as any combination of firmware or other software executing on an operating system) that, when executed by a processor or processing system, instruct the system or device to perform one or more functions described herein. When locally executed, such computer-readable instructions or code may be copied or distributed to the memory of a given computing system or device in various different manners, such as by transmission over a communications network including the Internet. Generally, then, embodiments of the present disclosure should not be limited to any particular set of hardware or memory structure, or to the particular manner in which computer-readable instructions are stored, unless otherwise expressly specified herein.

Finally, as used herein, the singular forms "a", "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. Explicitly referenced embodiments herein were chosen and described in order to best explain the principles of the disclosure and their practical application, and to enable others of ordinary skill in the art to understand the disclosure and recognize many alternatives, modifications, and variations on the described example(s). Accordingly, various embodiments and implementations other than those explicitly described are within the scope of the following claims.

## Claims

1. A roll gap optimization process performed in conjunction with a roller conditioner system (10) including conditioner rolls (12, 14) separated by a roll gap (16), the process (74) comprising:
receiving, at a processor architecture (24), pre-conditioned crop images of a forage crop captured at a visually-sampled field location prior to intake of the forage crop into the roller conditioner system (10);
analyzing, at the processor architecture (24), the pre-conditioned crop images to estimate an average stem dimension of the forage crop at the visually-sampled field location;
determining, at the processor architecture (24), a roll gap width target as a function of the average stem dimension; and
implementing, via the processor architecture (24), one or more of: (i) automatically adjusting a width of the roll gap (16) to substantially match the roll gap width target utilizing a roller adjustment mechanism (20) further included in the roller conditioner system (10), and (ii) displaying the roll gap width target on a display device (60) contained in or coupled to the processor architecture (24) for operator viewing.

2. The roll gap optimization process of claim 1, wherein the roller conditioner system (10) is integrated into a mower-conditioner (30) propelled utilizing an agricultural vehicle; and
wherein receiving comprises receiving, at the processor architecture (24), pre-conditioned crop images captured by a camera (56) mounted to the mower-conditioner (30) or to the agricultural vehicle.

3. The roll gap optimization process of claim 1 or 2, further comprising repeatedly performing the steps of receiving, analyzing, determining, and implementing during forward travel of the agricultural vehicle and usage of the mower-conditioner (30).

4. The roll gap optimization process according to at least one of the preceding claims, wherein the agricultural vehicle comprises a cabin in which the display device (60) is located; and
wherein displaying comprises generating a numerical readout of the roll gap width target on the display device (60) for viewing by an operator within the cabin of the agricultural vehicle.

5. The roll gap optimization process according to at least one of the preceding claims, wherein the roller adjustment mechanism (20) comprises a gap adjustment actuator (22); and
wherein implementing comprises controlling the gap adjustment actuator (22) to adjust the width of the roll gap (16) to substantially match the roll gap width target.

6. The roll gap optimization process according to at least one of the preceding claims, wherein the average stem dimension comprises an average stem diameter; and
wherein analyzing comprises:
isolating stems of the forage crop from other non-stem imagery contained within the pre-conditioned crop images; and
visually measuring and averaging diameters of the isolated stems to calculate the average stem diameter.

7. The roll gap optimization process according to at least one of the preceding claims, wherein the average stem dimension comprises an average stem diameter;
wherein determining comprises calculating a baseline value for the roll gap width target as X percentage of the average stem diameter; and
wherein 25% ≤ X ≥ 75%.

8. The roll gap optimization process according to at least one of the preceding claims, further comprising:
assigning, at the processor architecture (24), the forage crop to a forage crop category; and
determining a value of P based, at least in part, on the forage crop category to which the forage crop is assigned.

9. The roll gap optimization process according to at least one of the preceding claims, further comprising:
further receiving, at a processor architecture (24), post-conditioned crop images captured of the forage crop after processing by the roller conditioner system (10);
evaluating, at the processor architecture (24), the post-conditioned crop images; and
selectively modifying the roll gap width target based upon the post-conditioner crop images.

10. The roll gap optimization process according to at least one of the preceding claims, wherein evaluating comprises detecting, via image analysis performed by the processor architecture (24), a prevalence of cracks in the stems of crop plants visible within the post-conditioned crop images.

11. The roll gap optimization process according to at least one of the preceding claims, wherein evaluating comprises detecting, via image analysis performed by the processor architecture (24), a prevalence of leaf damage within the post-conditioned crop images.

12. The roll gap optimization process according to at least one of the preceding claims, wherein modifying comprises:
decreasing the roll gap width target if determining that the forage crop is under-conditioned when processed by the roller conditioner system (10); and
increasing the roll gap width target if determining that the forage crop is over-conditioned when processed by the roller conditioner system (10).

13. The roll gap optimization process according to at least one of the preceding claims, wherein the display device (60) comprises a portable display device (118) containing the processor architecture (128) and having an integrated camera (122); and
wherein the roll gap optimization process (74) further comprises the steps of:
prompting an agricultural vehicle operator, via the portable display device (118), to capture the pre-conditioned crop images utilizing the integrated camera (120); and
generating the roll gap width target on a screen (120) of the portable display device (118) after determining the roll gap width target as a function of the average stem dimension.

14. The roll gap optimization process according to at least one of the preceding claims, wherein the portable display device (118) comprises a smartphone or a tablet in possession of the agricultural vehicle operator.

15. A roller conditioner system, in particular for carrying out the roll gap optimization process according to at least one of the claims 1 to 14, utilized in conjunction with an agricultural vehicle having a cabin, the roller conditioner system (10) comprising:
a first camera (56) positioned to capture pre-conditioned crop images of a forage crop prior to intake of the forage crop into the roller conditioner system (10);
conditioner rollers (12, 14) separated by a roll gap (16) through which crop passes when processed by the roller conditioner system (10);
a roller adjustment mechanism (20) controllable to adjust a width of the roll gap (16) separating the conditioner rollers (12, 14); and
a processor architecture (24) coupled to the first camera (56) and to the roller adjustment mechanism (20), the processor architecture (24) configured to:
analyze the pre-conditioned crop images, as received from the first camera (56), to estimate an average stem dimension of the forage crop;
determine a roll gap width target based, at least in part, on the average stem dimension; and
perform one or more of: (i) automatically controlling the roller adjustment mechanism (20) to adjust the width of the roll gap (16) to substantially match the roll gap width target, and (ii) presenting the roll gap width target for operating viewing on a display device (60) located in the cabin of the agricultural vehicle.
